# EUROPEAN PATENT APPLICATION

(11) **EP 3 826 352 A1**
(43) Date of publication of application: **26.05.2021**
(21) Application number: 19848585.6
(22) Date of filing: 06.08.2019
(51) Int. Cl.: H04W 24/08

(54) **CELL SWITCHING METHOD, DEVICE AND SYSTEM**

(30) Priority: 06.08.2018 CN 201810885810
(71) Applicant: HUAWEI TECHNOLOGIES CO., LTD., Shenzhen, Guangdong 518129 (CN)
(72) Inventor: JIN, Wenjun, Shenzhen, Guangdong 518129 (CN); XIONG, Xiaochun, Shenzhen, Guangdong 518129 (CN)
(74) Representative: Epping - Hermann - Fischer
(86) International application number: PCT/CN2019/099523
(87) International publication number: WO 2020/029981

(57) **Abstract**

A cell handover method, an apparatus, and a system are disclosed, to resolve a problem that, in the prior art, a terminal device easily accesses a fake base station when performing a cell handover. In this application, a first base station may send a measurement control message to a terminal device, where the measurement control message includes information about a pilot signal allocated by a second base station to the terminal device. After the first base station receives a measurement response message from the terminal device, where the measurement response message includes signal quality of the pilot signal, and determines that the signal quality of the pilot signal satisfies a handover condition, the first base station performs a cell handover process for the terminal device. The first base station first determines that the signal quality, reported by the terminal device, of the pilot signal satisfies the handover condition, so that the terminal device is effectively prevented from directly accessing a fake base station, and it is also ensured that the terminal device can successfully access the second base station without a call drop.

## Description

This application claims priority to Chinese Patent Application No. 201810885810.8, filed with the Chinese Patent Office on August 6, 2018 and entitled "CELL HANDOVER METHOD, APPARATUS, AND SYSTEM", which is incorporated herein by reference in its entirety.

### TECHNICAL FIELD

This application relates to the field of communications technologies, and in particular, to a cell handover method, an apparatus, and a system

### BACKGROUND

In a cell handover process, a terminal device performs cell measurement on a serving cell and a neighboring cell based on measurement control information obtained from a source base station. Then the terminal device reports a measurement result of the cell measurement to the source base station. The source base station selects, for the terminal device based on the measurement result, a target base station to which the terminal device needs to be handed over, and then the terminal device performs a handover process.

However, in the existing cell handover process, when performing cell measurement on the serving cell and the neighboring cell, the terminal device cannot identify whether a base station of the neighboring cell is a fake base station. To cause the terminal device to more likely be connected to the fake base station, the fake base station pretends to be a base station of the neighboring cell. Consequently, the measurement result is a measurement result for the fake base station. The source base station does not identify the measurement result reported by the terminal device, but determines the target base station for the terminal device based on only the measurement result. If the measurement result reported by the terminal device is for the fake base station, the source base station determines, based on the measurement result, the base station of the neighboring cell as the target base station. If a signal between the base station of the neighboring cell and the terminal device is relatively poor, the terminal device cannot access the base station of the neighboring cell, and a handover fails.

### SUMMARY

This application provides a cell handover method, an apparatus, and a system, to resolve a problem that in the prior art, a handover failure easily occurs on a terminal device when a cell handover is performed.

According to a first aspect, an embodiment of this application provides a cell handover method. The method includes: A first base station may send a handover request to a second base station when determining, based on a measurement report from a terminal device, that the terminal device needs to be handed over to the second base station, to notify the second base station that the terminal device needs to access the second base station. Then the first base station may receive a handover response message from the second base station. The handover response message includes information about a pilot signal allocated by the second base station to the terminal device. Then the first base station may send a measurement control message to the terminal device. The measurement control message is used to indicate the terminal device to measure signal quality of the pilot signal, and includes the information about the pilot signal. After receiving a measurement response message from the terminal device, where the measurement response message includes the signal quality of the pilot signal, and determining that the signal quality of the pilot signal satisfies a handover condition, the first base station performs a cell handover process for the terminal device.

According to the foregoing method, when the terminal device needs to be handed over to the second base station, the first base station does not directly perform a cell handover on the terminal device, but first needs to determine whether the signal quality, reported by the terminal device, of the pilot signal satisfies the handover condition, to ensure that the terminal device can successfully access the second base station without a call drop, so that a handover succeeds.

In a possible design, after determining that the signal quality of the pilot signal does not satisfy the handover condition, the first base station sends a handover cancel message to the second base station.

According to the foregoing method, the first base station sends the handover cancel message, to notify the second base station that the terminal device cannot access the second base station, so that the second base station can no longer reserve a resource for the terminal device.

In a possible design, before sending the measurement control message to the terminal device, the first base station further needs to determine that the first base station is capable of serving the terminal device when a handover fails.

According to the foregoing method, when determining that the first base station is still capable of serving the terminal device, the first base station triggers the terminal device to measure the pilot signal, so that the terminal device can be handed over to the second base station when business continuity is ensured, to prevent a call drop phenomenon, caused because the first base station is not capable of serving the terminal device, from occurring on the terminal device in a process in which the terminal device measures the pilot signal.

In a possible design, the first base station may determine, in one of the following three manners, the second base station to which the terminal device needs to be handed over:
First manner: The first base station determines, according to a load balance policy, the second base station to which the terminal device needs to be handed over.
Second manner: The first base station determines the second base station based on a service request of the terminal device.
Third manner: The first base station determines the second base station based on a frequency priority of a cell.

According to the foregoing method, the first base station more flexibly determines the second base station to which the terminal device needs to be handed over, so that the method can be used in different scenarios, and a range of application of the method is wider.

In a possible design, the first base station may further receive a handover request from a third base station, and then send a handover response message to the third base station. The handover response message includes information about a pilot signal allocated by the first base station to the terminal device. In other words, the first base station may also be used as a base station to which the terminal device or another terminal device needs to be subsequently handed over, and the first base station may allocate a pilot signal to the terminal device. The third base station is a base station different from the first base station.

According to the foregoing method, when the first base station is used as the base station to which the terminal device needs to be subsequently handed over, the first base station may alternatively allocate a pilot signal to the terminal device, and then further trigger a process in which the terminal device measures the pilot signal allocated by the first base station to the terminal device. Further, it can be ensured that the terminal device can successfully access the first base station, and a handover success rate is ensured.

According to a second aspect, an embodiment of this application provides a cell handover method. The method includes: A second base station first receives a handover request from a first base station. Then the second base station sends a handover response message to the first base station. The handover response message includes information about a pilot signal allocated by the second base station to a terminal device.

According to the foregoing method, the handover response message sent by the second base station to the first base station definitely includes the information about the pilot signal allocated by the second base station to the terminal device, and the first base station may be triggered to indicate the terminal device to measure the pilot signal allocated by the second base station to the terminal device. Further, a call drop caused by a handover failure is prevented from occurring on the terminal device, and a success rate of a cell handover performed on the terminal device is also ensured.

In a possible design, the second base station receives a handover cancel message from the first base station, and stops reserving a resource for the terminal device.

According to the foregoing method, the second base station can be notified in time by using the handover cancel message, so that a resource can be effectively saved, and cell handover efficiency is improved.

According to a third aspect, an embodiment of this application provides a cell handover method. The method includes: A terminal device may receive a measurement control message from a first base station. The measurement control message is used to indicate the terminal device to measure signal quality of a pilot signal allocated by a second base station to the terminal device. The measurement control message includes information about the pilot signal allocated by the second base station to the terminal device. After receiving the measurement control message, the terminal device measures the signal quality of the pilot signal based on the measurement control message. After finishing measuring the signal quality, the terminal device sends a measurement response message to the first base station. The measurement response message includes the signal quality of the pilot signal

According to the foregoing method, the terminal device does not directly access the second base station, but needs to first measure the signal quality of the pilot signal, so that it can be ensured that the terminal device can successfully access the second base station without a call drop.

According to a fourth aspect, an embodiment of this application further provides a communications apparatus. The communications apparatus is used in a first base station. For beneficial effects, refer to the descriptions in the first aspect. Details are not described herein again. The apparatus has a function of implementing actions in the method example in the first aspect. The function may be implemented by hardware, or may be implemented by hardware executing corresponding software. The hardware or the software includes one or more modules corresponding to the foregoing function. In a possible design, a structure of the apparatus includes a receiving unit, a processing unit, and a sending unit. The units may execute corresponding functions in the method example in the first aspect. For details, refer to the detailed descriptions in the method example. Details are not described herein again.

According to a fifth aspect, an embodiment of this application further provides a communications apparatus. The communications apparatus is used in a second base station. For beneficial effects, refer to the descriptions in the second aspect. Details are not described herein again. The apparatus has a function of implementing actions in the method example in the second aspect. The function may be implemented by hardware, or may be implemented by hardware executing corresponding software. The hardware or the software includes one or more modules corresponding to the foregoing function. In a possible design, a structure of the apparatus includes a receiving unit and a sending unit. The units may execute corresponding functions in the method example in the second aspect. For details, refer to the detailed descriptions in the method example. Details are not described herein again.

According to a sixth aspect, an embodiment of this application further provides a communications apparatus. The communications apparatus is used in a terminal device. For beneficial effects, refer to the descriptions in the third aspect. Details are not described herein again. The apparatus has a function of implementing actions in the method example in the third aspect. The function may be implemented by hardware, or may be implemented by hardware executing corresponding software. The hardware or the software includes one or more modules corresponding to the foregoing function. In a possible design, a structure of the apparatus includes a receiving unit, a processing unit, and a sending unit. The units may execute corresponding functions in the method example in the third aspect. For details, refer to the detailed descriptions in the method example. Details are not described herein again.

According to a seventh aspect, an embodiment of this application further provides a communications apparatus. The communications apparatus is used in a first base station. For beneficial effects, refer to the descriptions in the first aspect. Details are not described herein again. A structure of the communications apparatus includes a processor and a memory. The processor is configured to support the communications apparatus in performing a corresponding function in the method in the first aspect. The memory is coupled to the processor, and stores a program instruction and data that are necessary for the communications apparatus. The structure of the communications apparatus further includes a communications interface, configured to communicate with another device.

According to an eighth aspect, an embodiment of this application further provides a communications apparatus. The communications apparatus is used in a second base station. For beneficial effects, refer to the descriptions in the second aspect. Details are not described herein again. A structure of the communications apparatus includes a processor and a memory. The processor is configured to support the communications apparatus in performing a corresponding function in the method in the second aspect. The memory is coupled to the processor, and stores a program instruction and data that are necessary for the communications apparatus. The structure of the communications apparatus further includes a communications interface, configured to communicate with another device.

According to a ninth aspect, an embodiment of this application further provides a communications apparatus. The communications apparatus is used in a terminal device. For beneficial effects, refer to the descriptions in the third aspect. Details are not described herein again. A structure of the communications apparatus includes a processor and a memory. The processor is configured to support the communications apparatus in performing a corresponding function in the method in the third aspect. The memory is coupled to the processor, and stores a program instruction and data that are necessary for the communications apparatus. The structure of the communications apparatus further includes a communications interface, configured to communicate with another device.

According to a tenth aspect, an embodiment of this application further provides a communications system For beneficial effects, refer to the descriptions in the foregoing aspects. Details are not described herein again. The communications system includes a first base station and a second base station.

The first base station is configured to send a handover request to the second base station when determining, based on a measurement report from a terminal device, that the terminal device needs to be handed over to the second base station.

The second base station is configured to receive the handover request sent by the first base station, and send a handover response message to the first base station. The handover response message includes information about a pilot signal allocated by the second base station to the terminal device.

The first base station is further configured to receive the handover response message sent by the second base station, and send a measurement control message to the terminal device. The measurement control message includes the information about the pilot signal. The first base station receives a measurement response message from the terminal device. The measurement response message includes signal quality of the pilot signal. The first base station performs a cell handover process for the terminal device when the signal quality of the pilot signal satisfies a handover condition.

In a possible design, when determining that the signal quality of the pilot signal does not satisfy the handover condition, the first base station may further send a handover cancel message to the second base station.

In a possible design, before sending the measurement control message to the terminal device, the first base station further needs to determine that the first base station is capable of serving the terminal device when a handover fails.

In a possible design, when determining the second base station to which the terminal device needs to be handed over, the first base station may specifically use one of the following manners:
1. The first base station determines, according to a load balance policy, the second base station to which the terminal device needs to be handed over.
2. The first base station determines the second base station based on a service request of the terminal device.
3. The first base station determines the second base station based on a frequency priority of a cell.

In a possible design, the system further includes a third base station. The first base station is further configured to receive a handover request from the third base station, and send a handover response message to the third base station. The handover response message includes information about a pilot signal allocated by the first base station to the terminal device.

According to an eleventh aspect, this application further provides a computer-readable storage medium, the computer-readable storage medium stores an instruction, and when the instruction is run on a computer, the computer is enabled to perform the methods in the foregoing aspects.

According to a twelfth aspect, this application further provides a computer program product that includes an instruction, and when the computer program product runs on a computer, the computer is enabled to perform the methods in the foregoing aspects.

According to a thirteenth aspect, this application further provides a computer chip. The chip is connected to a memory. The chip is configured to read and execute a software program stored in the memory, to perform the methods in the foregoing aspects.

### BRIEF DESCRIPTION OF DRAWINGS

FIG. 1 is a schematic diagram of a cell handover method;
FIG. 2 is a schematic structural diagram of a network architecture according to this application;
FIG. 3 is a schematic diagram of a cell handover method according to this application;
FIG. 4 is a schematic diagram of a cell handover method according to this application;
FIG. 5 to FIG. 9 are schematic structural diagrams of a communications apparatus according to this application; and
FIG. 10 is a schematic structural diagram of a communications system according to this application.

### DESCRIPTION OF EMBODIMENTS

This application provides a cell handover method, an apparatus, and a system, to resolve a problem that in the prior art, a handover failure easily occurs on a terminal device during a cell handover.

It should be understood that, in descriptions of this application, terms such as "first", "second", and "third" are used only for distinction and description, and shall not be understood as an indication or implication of relative importance or an indication or implication of an order. In embodiments of this application, "a plurality of" means two or more. In this application, a base station to which the terminal device is currently connected is a source base station, and a base station to which the terminal device needs to be handed over is a target base station. A cell in which the source base station is located in a source cell, and a cell in which the target base station is located is a target cell.

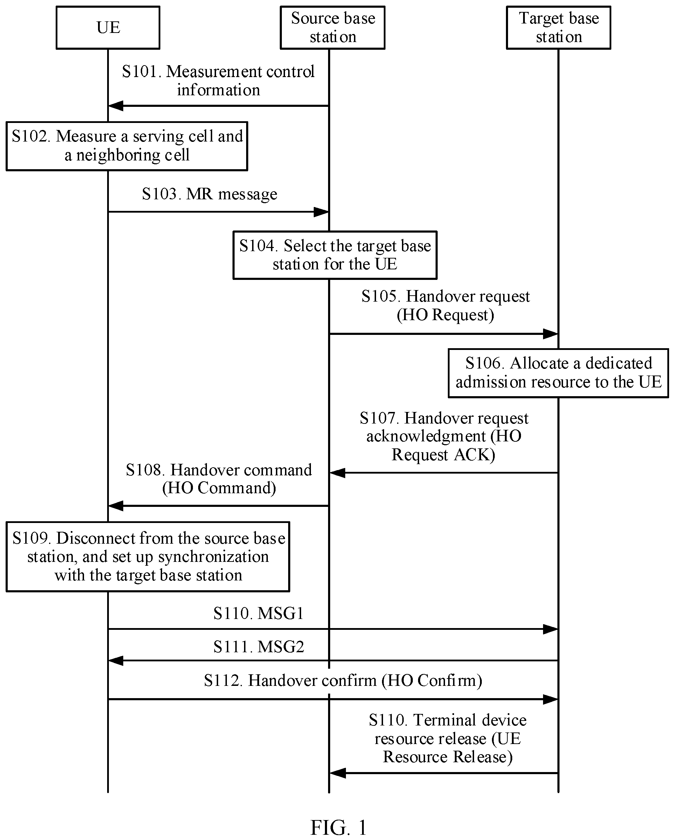

FIG. 1 shows a common cell handover method. The cell handover method may be mainly divided into three processes: a UE measurement process, a handover judgment and handover preparation process, and a handover execution process. The method includes the following steps.

S101. A source base station sends measurement control (measurement control) information to UE.

S102. After receiving the measurement control information from the source base station, the UE measures a serving cell and a neighboring cell based on the measurement control information.

Specifically, the UE may measure signal quality of signals sent on resource blocks of the serving cell and the neighboring cell.

S103. When a measurement result obtained after the UE measures the serving cell and the neighboring cell satisfies a measurement report condition, the UE reports a measurement report (measurement report, MR) message to the source base station.

When notifying the UE to measure the serving cell and the neighboring cell, the source base station notifies the measurement report condition to the UE. For example, the source base station may notify the UE to periodically report a measurement result. Alternatively, the source base station may notify the UE to report a measurement result when the measured signal quality of the signal sent on the resource block of the neighboring cell is greater than a threshold. The foregoing measurement report conditions are all examples for description. Actually, the measurement report conditions may all be set based on a specific application scenario.

S101 to S103 are the UE measurement process. In this process, the UE measures the serving cell and the neighboring cell based on the measurement control information sent by the source base station, and reports the measurement result to the source base station.

S104. The source base station makes a handover judgment based on the measurement result reported by the UE, and selects a target base station for the UE.

The source base station may include a radio resource management (radio resource management, RRM) module. The RRM module in the source base station is configured to be responsible for functions such as base station power control, base station load control, mobility management, and channel allocation. In a cell handover process, the RRM module in the source base station may make a judgment based on a load condition of the source base station, a quality of service (quality of service, QoS) requirement of a service, and the like in combination with the measurement result reported by the UE, and determine whether the UE needs to be handed over to another cell. After determining that the UE needs to be handed over to another cell, the source base station may select a target cell for the UE based on the measurement result reported by the UE. For example, the source base station may filter neighboring cells in descending order of frequency priorities of cells and signal quality of the cells, to further select a cell that satisfies a handover condition and whose signal quality is the highest in cells whose frequency priorities are the highest, as the target cell.

S105. The source base station sends a handover request (handover request, HO Request) message to the target base station.

S106. After receiving the HO Request message, the target base station makes a handover admission judgment, and allocates a dedicated admission resource to the UE if the UE is allowed to be handed over to the target cell.

The target base station may also include an RRM module. For related descriptions of the RRM module, refer to the foregoing content. Details are not described herein again. After the target base station receives the HO Request message, the RRM module in the target base station determines, based on a load condition of the target base station and a QoS requirement of a service, whether the UE is allowed to access the target cell. If the UE is allowed to access the target cell, the target base station allocates the dedicated admission resource to the UE, so that the UE can access the target cell based on the admission resource.

S107. The target base station sends a handover request acknowledgment (HO Request ACK) message to the source base station, where the HO Request ACK message carries information required by the UE for accessing the target cell.

Specifically, the information required by the UE for accessing the target cell includes radio resource configuration information required for establishing a bearer between an air interface signaling plane and a user plane.

S104 to S107 are the handover judgment and handover preparation process. In this process, the source base station selects the target base station for the UE and obtains the information required by the terminal device for accessing the target cell.

S108. The source base station sends a handover command (HO Command) message to the UE, where the HO Command message carries the information required by the UE for accessing the target cell.

S109. After receiving the HO Command message from the source base station, the UE starts to perform a handover. For example, the UE first disconnects from the source base station, and then sets up synchronization with the target base station.

S110. The UE sends a first random access message (MSG1) to the target base station, to request to access the target cell, where the MSG1 carries a preamble (preamble) selected by the UE for accessing the target cell.

S111. After receiving the MSG1, the target base station sends a second random access message (MSG2) to the UE, where the MSG2 carries uplink scheduling resource information.

S112. The UE sends a handover confirm (HO Confirm) message to the target base station.

After receiving the HO Confirm message, the target base station may determine that the UE is connected to the target cell, and the cell handover is completed.

S113. After receiving the HO Confirm message from the UE, the target base station sends a UE resource release (UE Resource Release) message to the source base station, to notify the source base station to release a resource occupied by the UE.

S108 to S113 are the handover execution process. In this process, the UE and the target base station perform a random access process, and the target base station notifies the source base station to release the resource occupied by the UE.

It can be learned from the foregoing cell handover process that, in the UE measurement process, the UE measures the serving cell and the neighboring cell. A fake base station pretends to be a real base station of the neighboring cell, and sends a measurement signal to the UE. During the measurement, whether a measurement result is for the real base station of the neighboring cell or for the fake base station cannot be identified. If the measurement result is for the fake base station, and a signal between the real base station of the neighboring cell and the UE is relatively poor, when the cell handover is performed, the source base station determines, based on the measurement result for the fake base station, the real base station of the neighboring cell as a base station to which the UE needs to be handed over. When the UE is handed over to the real base station of the neighboring cell, because the signal between the real base station of the neighboring cell and the UE is relatively poor, the handover fails. In addition, as a result, service interruption and a call drop occur on the UE.

Therefore, the embodiments of this application provide a cell handover method, an apparatus, and a system The following further describes this application in detail with reference to the accompanying drawings. A specific operation method in method embodiments may also be used in an apparatus embodiment or a system embodiment.

For ease of distinguishing between a first base station and a second base station, in the method embodiments of this application, the first base station is used as a base station to which a terminal device is currently connected, and is a source base station. The second base station is used as a base station to which the terminal device needs to be handed over, and is a target base station.

Actually, after the terminal device is handed over, in other words, when the terminal device is not connected to the first base station, the first base station may alternatively become a base station to which the terminal device needs to be handed over. In other words, the first base station may alternatively be a target base station. In this case, for a method performed by the first base station, refer to a method performed by the second base station (which is the target base station of the embodiments of this application). Certainly, the first base station may alternatively be a target base station when another terminal device performs a cell handover. In this case, for a method performed by the first base station, refer to the method performed by the second base station (which is the target base station of the embodiments of this application). Details are not described herein again.

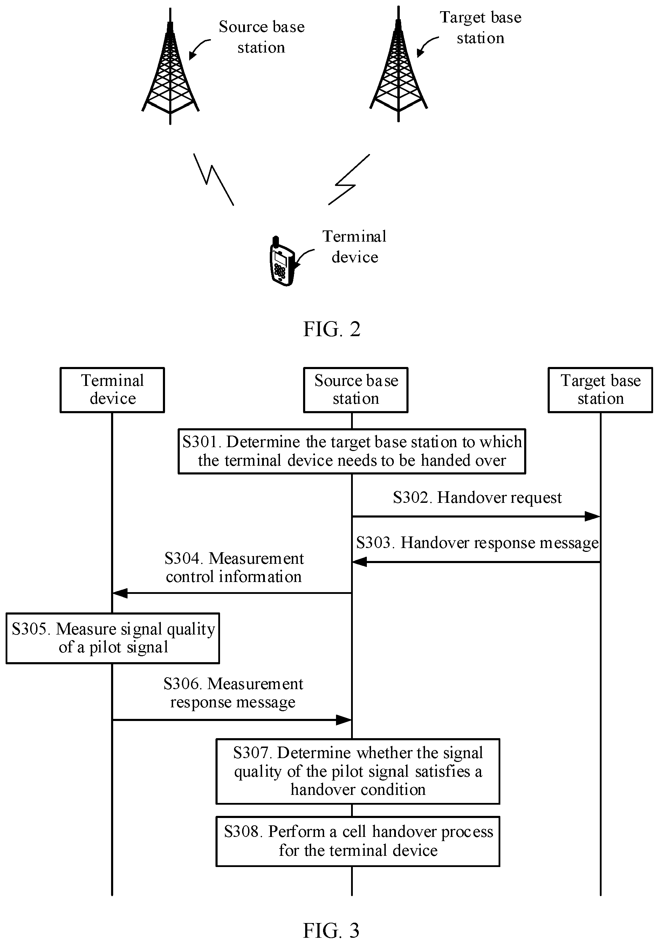

FIG. 2 is a schematic diagram of a possible network architecture according to this application. The network architecture includes a terminal device, a source base station, and a target base station. The terminal device communicates with the source base station and the target base station through a wireless interface. The source base station and the target base station may communicate with each other by using a wired connection, for example, communicate with each other through an X2 interface or an Xn interface, or may communicate with each other through an air interface.

In this embodiment of this application, after determining the target base station, the source base station sends a handover request to the target base station, and obtains, from the target base station, information about a pilot signal allocated by the target base station to the terminal device. The source base station adds the information about the pilot signal to a measurement control message, to indicate the terminal device to measure signal quality of the pilot signal, and obtains the signal quality of the pilot signal from the terminal device. After determining that the signal quality of the pilot signal satisfies a handover condition, the source base station performs a cell handover process for the terminal device.

The terminal device may measure the signal quality of the pilot signal after receiving the measurement control message of the source base station, and report the signal quality of the pilot signal to the source base station.

After receiving the handover request from the source base station, the target base station adds, to a handover response message, the information about the pilot signal allocated by the target base station to the terminal device, and sends the handover response message to the source base station.

The terminal device in this application may also be referred to as user equipment (user equipment, UE). The terminal device may be deployed on land, including indoors or outdoors, or in a hand-held manner or an in-vehicle manner. The terminal device can also be deployed on the water (for example, on a ship). The terminal device can also be deployed in the air (for example, on an airplane, a balloon, or a satellite). The terminal device may be a mobile phone (mobile phone), a tablet (pad), a computer with a wireless transceiver function, a virtual reality (virtual reality, VR) device, an augmented reality (augmented reality, AR) device, a wireless device in industrial control (industrial control), a wireless device in self driving (self driving), a wireless device in telemedicine (remote medical), a wireless device in a smart grid (smart grid), a wireless device in transportation safety (transportation safety), a wireless device in a smart city (smart city), a wireless device in a smart home (smart home), or the like.

The base stations in this application are the source base station and the target base station. A base station is a device that provides a wireless communication function for a terminal device, and includes, but is not limited to a next generation base station (gnodeB, gNB) in 5G, an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved nodeB or a home node B, HNB), a baseband unit (BaseBand Unit, BBU), a transmission and receiving point (transmitting and receiving point, TRP), a transmission point (transmitting point, TP), a mobile switching center, and the like.

Based on an existing cell handover scenario, a cell handover scenario may be classified into a necessary-type handover scenario and an unnecessary-type handover scenario. The following describes the two types of handover scenarios.

First type: Necessary-type handover scenario.

In this handover scenario, the terminal device cannot continue to perform a service in the source cell, and a cell handover needs to be performed. Otherwise, a call drop occurs.

For example, due to mobility of the terminal device, a movement range of the terminal device exceeds coverage of the source cell. To ensure service continuity of the terminal device, a cell handover needs to be performed.

For another example, because network performance of the current source cell deteriorates, signal quality is less than a threshold, and the source cell cannot provide a service for the terminal device. A cell handover needs to be performed to enable the terminal device to continue to perform a service.

The foregoing scenarios are only examples for description. Actually, there are many necessary-type handover scenarios, and the necessary-type handover scenarios are not listed one by one herein.

Second type: Unnecessary-type handover scenario.

In this handover scenario, the terminal device needs to perform a cell handover according to some network deployment policies or network instructions. If the handover fails, the terminal device can still perform a service in the source cell.

For example, when load of the source cell in which the source base station is located is excessively high, to balance the load of the source cell, the terminal device may be handed over according to a load balance policy.

For another example, to improve network performance of a cell in which the terminal device performs a service, during a cell handover, the terminal device may be handed over to a cell whose network performance is better. The cell handover includes a service-based handover and a frequency-priority-based handover.

The foregoing scenarios are only examples for description. Actually, there are many unnecessary-type handover scenarios, and the unnecessary-type handover scenarios are not listed one by one herein.

The cell handover scenario is not limited in this embodiment of this application. The cell handover method provided in this embodiment of this application may be used in the necessary-type handover scenario or the unnecessary-type handover scenario.

In this embodiment of this application, after determining the target base station, the source base station does not directly hand over the terminal device to the target cell. Instead, the terminal device needs to measure the signal quality of the pilot signal allocated by the target base station to the terminal device. After the signal quality of the pilot signal satisfies the handover condition, the cell handover process is performed on the terminal device. In the manner in this embodiment of this application, after the target base station is determined, the signal quality of the pilot signal allocated by the target base station to the terminal device further needs to be determined, to ensure that the terminal device can be connected to a real base station of a subsequent handover, thereby further ensuring a success of the cell handover, so that a call drop caused by a handover failure is prevented from occurring on the terminal device.

The following describes in detail a cell handover method provided in this application. As shown in FIG. 3, the method includes the following steps.

S301. A source base station determines, based on a measurement report from a terminal device, a target base station to which the terminal device needs to be handed over.

When determining the target base station, the source base station needs to first receive the measurement report reported by the terminal device. The measurement report is a result obtained after the terminal device measures a serving cell and one or more neighboring cells. The source base station selects, from the neighboring cells based on the measurement report, a base station for the terminal device as the target base station. The selection may be based on a preset selection rule. For example, a base station of a cell with a high priority or good quality of service is selected as the target base station.

In a possible implementation, when determining the target base station, the source base station may determine, according to a load balance policy, the target base station to which the terminal device needs to be handed over.

If load of a cell in which the source base station is currently located is excessively high, to reduce the load of the cell in which the source base station is located and achieve load balance, a base station of a cell whose load is relatively low may be selected as the target base station based on load of the neighboring cells.

In another possible implementation, when determining the target base station, the source base station may determine the target base station based on a quality of service class identifier (QoS Class Identifier, QCI) of a service of the terminal device, or may determine the target base station based on a service request of the terminal device, or may determine the target base station based on a frequency priority of a cell. The following describes the foregoing three manners of determining the target base station.

First manner: The source base station determines the target base station based on a QCI of the terminal device.

Services with different QCIs have different requirements on frequencies for bearing the services. After determining a QCI service, the source base station may preferentially establish the QCI service at a frequency expected by the QCI service, to further determine a base station of a cell corresponding to the frequency as the target base station.

Second manner: The source base station determines the target base station based on a service request of the terminal device.

For example, in a service steering scenario, different services need to be performed in different cells. For another example, some specific services are limited in some cells. For example, some cells do not have a voice over long term evolution (voice over Long Term Evolution, VoLTE) voice service operation license, and therefore, a voice service cannot be performed.

In this case, the source base station may hand over the terminal device to a cell in which a service of the terminal device is allowed to be performed, to further determine the target base station, thereby ensuring service continuity.

Third manner: The source base station determines the target base station based on a frequency priority of a cell.

For example, to ensure that a service of the terminal device can be relatively likely to be borne on a high frequency band, and ensure that a low frequency band is idle, thereby ensuring continuous coverage, based on this feature, the source base station may determine, based on a frequency priority, a cell whose frequency band is relatively high, to further determine the target base station.

It should be noted that, the foregoing three manners of determining the target base station are only examples for description, and are not limited in this embodiment of this application.

It can be learned from the foregoing three possible implementations that, the manners of determining the target base station according to the load balance policy, based on the QCI of the service of the terminal device, and based on the service request of the terminal device all belong to a cell handover in an unnecessary-type handover scenario. In other words, in the unnecessary-type handover scenario, the source base station may use the cell handover method provided in this embodiment of this application. The foregoing two possible implementations are only examples for description. Actually, the cell handover method provided in this embodiment of this application is also applicable in another unnecessary-type handover scenario. Certainly, the cell handover method provided in this embodiment of this application may also be used in a necessary-type handover scenario. This is not limited in this application.

In the foregoing two possible implementations, the source base station determines the target base station of a relatively flexible manner, and the terminal device can better perform a service after the handover.

S302. After determining the target base station to which the terminal device needs to be handed over, the source base station sends a handover request to the target base station.

S303. The target base station receives the handover request from the source base station, and sends a handover response message to the source base station after receiving the handover request from the source base station. The handover response message includes information about a pilot signal allocated by the target base station to the terminal device.

After determining the target base station, the source base station needs to send the handover request to the target base station, to notify the target base station that the terminal device needs to perform a cell handover. After receiving the handover request, if allowing the terminal device to access a target cell, the target base station sends the handover response message to the source base station. In addition, the handover response message carries the information about the pilot signal allocated by the target base station to the terminal device.

The pilot signal allocated by the target base station to the terminal device is a user-level pilot signal allocated by the target base station to the terminal device, and is unique to the terminal device. In addition, the information about the pilot signal is sent to the terminal device through a secure channel, and can be obtained only by the terminal device.

Specifically, the information about the pilot signal may be identification information of the pilot signal, or may be other identification information. A type of the information about the pilot signal is not limited in this application. Any information that can enable the source base station to determine the pilot signal is applicable to this embodiment of this application.

The handover response message includes the information about the pilot signal, so that the source base station can trigger the terminal device to measure signal quality of the pilot signal, instead of directly enabling the terminal device to access the target cell. In this way, it can be ensured that the target base station is not a fake base station, and further, it is ensured that the terminal device can be successfully handed over to the target cell, so that it can be ensured that a call drop does not occur on the terminal device after the terminal device performs the cell handover, and a service continues to be performed.

S304. The source base station receives the handover response message from the target base station, and sends a measurement control message to the terminal device. The measurement control information includes the information about the pilot signal, and may be used to indicate the terminal device to measure the signal quality of the pilot signal

After receiving the handover response message from the target base station, when determining that the target base station allows the terminal device to access the target cell, the source base station sends the measurement control message to the terminal device, to indicate the terminal device to measure the signal quality of the pilot signal. The measurement control message carries the information about the pilot signal.

A manner in which the measurement control message indicates the terminal device to measure the signal quality of the pilot signal is not limited in this application. For example, an information element may be added to the measurement control message. The information element indicates the terminal device to measure the signal quality of the pilot signal. Alternatively, a message type of the measurement control message may be set. The message type is a message type indicating to measure the signal quality. Provided that the terminal device receives the measurement control message of this message type, the terminal device may determine that the signal quality of the pilot signal needs to be measured. Alternatively, another manner may be used. This is not limited in this embodiment of this application. Any manner in which the terminal device may be indicated to measure the signal quality of the pilot signal is applicable to this embodiment of this application.

Optionally, before sending the measurement control message to the terminal device, the source base station may first determine that the source base station is still capable of serving the terminal device if the terminal device fails to be handed over. In other words, in the unnecessary-type handover scenario, the source base station may send the measurement control message to the terminal device.

If the source base station cannot continue to provide a service for the terminal device in the necessary-type handover scenario, there is a possibility that a call drop occurs on the terminal device. To prevent service interruption from occurring on the terminal device, a handover process may be directly performed on the terminal device. The measurement control message does not need to be sent to the terminal device, and the process in which the terminal device measures the pilot signal does not need to be triggered.

S305. The terminal device receives the measurement control message from the source base station, and measures the signal quality of the pilot signal based on the measurement control message.

After receiving the measurement control message from the source base station, the terminal device determines that the signal quality of the pilot signal needs to be measured. Then the terminal device receives the pilot signal based on the information, carried in the measurement control message, about the pilot signal, and measures the signal quality of the pilot signal.

The measurement control message may further include information about a time-frequency resource corresponding to the pilot signal. After receiving the measurement control information, the terminal device may receive, on the time-frequency resource corresponding to the pilot signal, the pilot signal.

When measuring the signal quality of the pilot signal, the terminal device may reflect the signal quality of the pilot signal by using reference signal received power (reference signal received power, RSRP) or reference signal received quality (reference signal received quality, RSRQ) of the pilot signal. The foregoing method for measuring the signal quality of the pilot signal is an example for description. Actually, the terminal device may alternatively reflect the signal quality of the pilot signal by measuring another attribute of the information about the pilot signal. This is not limited in this embodiment of this application.

After measuring the signal quality of the pilot signal, the terminal device may directly perform step 306. Alternatively, the terminal device may first further determine the signal quality, determined through the measurement, of the pilot signal, and perform step 306 after determining that the signal quality of the pilot signal satisfies a report condition.

In a possible implementation, the report condition may be that the signal quality of the pilot signal is greater than a specified threshold. To be specific, when the signal quality of the pilot signal is greater than the specified threshold, step 306 is performed. Otherwise, step 306 is not performed. When the signal quality of the pilot signal does not satisfy the report condition, a notification message may be alternatively sent to the source base station, to notify the source base station that the signal quality of the pilot signal does not satisfy the report condition, and trigger the source base station to reselect a target base station for the terminal device.

S306. The terminal device sends a measurement response message to the source base station. The measurement response message includes the signal quality of the pilot signal

After measuring the signal quality of the pilot signal, the terminal device may send the measurement response message to the source base station. The measurement response message carries a measurement result obtained after the terminal device measures the signal quality of the pilot signal.

S307. The source base station receives the measurement response message from the terminal device, and determines whether the signal quality of the pilot signal satisfies a handover condition.

Specifically, there are many handover conditions. For example, the handover condition is that the signal quality of the pilot signal is greater than a first threshold. When the signal quality of the pilot signal is greater than the first threshold, step 308 is performed. Otherwise, the cell handover is not performed. For another example, the handover condition is that a difference between the signal quality of the pilot signal and signal quality of a cell-specific reference signal of the source base station is greater than a second threshold. When the difference between the signal quality of the pilot signal and the signal quality of the cell-specific reference signal of the source base station is greater than the second threshold, step 308 is performed. Otherwise, the cell handover is not performed. The foregoing two handover conditions are merely examples for description. Actually, the handover condition is not limited in this embodiment of this application. During specific implementation, the handover condition may be set based on a scenario.

S308. After determining that the signal quality of the pilot signal satisfies the handover condition, the source base station performs a cell handover process for the terminal device.

If the source base station determines that the signal quality of the pilot signal satisfies the handover condition, it indicates that the terminal device can be handed over to the target cell, and the source base station starts to perform the cell handover process for the terminal device. For the cell handover process for the terminal device, refer to the handover execution process in S108 to S113 in the embodiment shown in FIG. 1. Details are not described herein again.

After determining that the signal quality of the pilot signal does not satisfy the handover condition, the source base station sends a handover cancel message to the target base station.

If the source base station determines that the signal quality of the pilot signal does not satisfy the handover condition, it indicates that the terminal device cannot be handed over to the target cell. The source base station needs to notify the target base station that the handover is canceled, and sends the handover cancel message to the target base station. After receiving the handover cancel message from the source base station, the target base station may determine that the terminal device cannot be handed over, and no resource needs to be allocated to the terminal device.

The source base station may further send a handover failure message to the terminal device, to notify the terminal device that the terminal device cannot be handed over to the target base station.

The cell handover method shown in FIG. 3 may be combined with a cell handover method in the prior art. The following further describes the embodiment shown in FIG. 3 by using a specific embodiment. In the specific embodiment, the cell handover method in this application is combined with the cell handover method in the prior art.

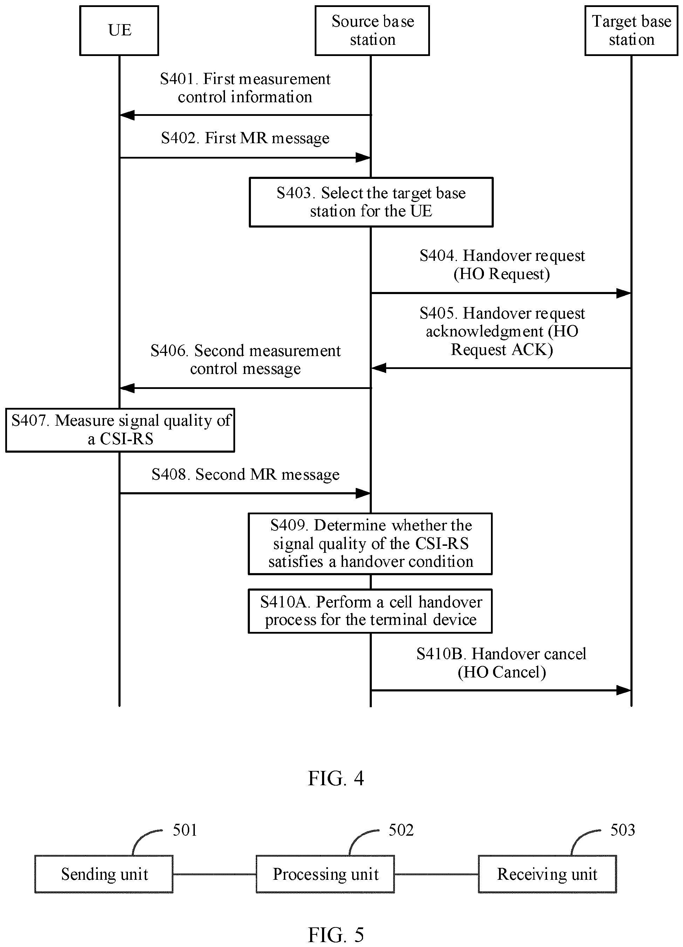

FIG. 4 shows another cell handover method according to an embodiment of this application. An example in which a pilot signal allocated by a target base station to a UE is a channel state information reference signal (channel state information reference signal, CSI-RS) and a measurement response message is a second MR message is used for description. The method includes the following steps.

S401. A source base station sends first measurement control (measurement control) information to the UE.

S402. The UE receives the first measurement control information from the source base station, and measures a serving cell and a neighboring cell based on the first measurement control information. The UE sends a first MR message to the source base station when a measurement result satisfies a measurement report condition.

S401 and S402 are a UE measurement process. For a specific execution process, refer to S101 to S103. Details are not described herein again.

S403 is the same as S104. For S403, refer to the foregoing content. Details are not described herein again.

S404 is the same as S105. For S404, refer to the foregoing content. Details are not described herein again.

S405. The target base station sends an HO Request ACK message to the source base station. The HO Request ACK message includes information required by the UE to access a target cell, and further includes information about the CSI-RS allocated by the target base station to the UE.

S406. The source base station sends a second measurement control message to the UE. The second measurement control message includes the information about the CSI-RS allocated by the target base station to the UE.

After the source base station receives the HO Request ACK message, if the HO Request ACK message includes the information about the CSI-RS, the source base station may trigger the terminal device to perform secondary measurement and the source base station to perform a renewed judgment process.

It should be noted that, the secondary measurement is measurement of signal quality of the CSI-RS. In the embodiment shown in FIG. 4, the terminal device has measured the serving cell and the neighboring cell in S402, and therefore, the measurement of the signal quality of the CSI-RS is referred to as the secondary measurement. Correspondingly, the renewed judgment process is a judgment process performed by the source base station based on a measurement result of the signal quality of the CSI-RS. In S403, the source base station has made a handover judgment based on the measurement result reported by the terminal device, and therefore, a judgment made by the source base station on the measurement result of the signal quality of the CSI-RS is herein referred to as a renewed judgment.

Alternatively, when the HO Request ACK message includes the information about the CSI-RS and a current cell handover scenario is an unnecessary-type cell handover scenario, the source base station may trigger the terminal device to perform the secondary measurement and the source base station to perform the renewed judgment process.

S407. The UE receives the second measurement control message from the source base station, and then measures the signal quality of the CSI-RS based on the second measurement control message.

S408. The UE sends the second MR message to the source base station. The second MR message includes the measurement result obtained after the UE measures the signal quality of the CSI-RS. In other words, the second MR message includes the signal quality of the CSI-RS.

S409. After receiving the second MR message from the UE, the source base station makes a handover judgment based on the second MR message, and determines whether the signal quality of the CSI-RS satisfies a handover condition.

If the signal quality of the CSI-RS satisfies the handover condition, S410A is performed.

S410A. The source base station performs a cell handover process for the terminal device. In this process, the UE and the target base station perform a random access process, and the target base station notifies the source base station to release a resource occupied by the UE. For details, refer to S108 to S113. Details are not described herein again.

If the signal quality of the CSI-RS does not satisfy the handover condition, S410B is performed.

S410B. The source base station sends a handover cancel (handover cancel, HO cancel) message to the target base station, to notify the target base station that the handover is canceled.

Optionally, for network maintenance, the source base station may locally record exception information of this handover. The recording of the exception information helps the source base station identify a fake base station.

Based on a same inventive concept as the method embodiment, an embodiment of this application further provides a communications apparatus. The communications apparatus is configured to perform the method performed by the source base station of the foregoing method embodiment. For related features, refer to the foregoing method embodiment. Details are not described herein again. As shown in FIG. 5, the apparatus includes a sending unit 501, a processing unit 502 and a receiving unit 503.

The processing unit 502 is configured to determine, based on a measurement report from a terminal device, a second base station to which the terminal device needs to be handed over.

The sending unit 501 is configured to send a handover request to the second base station when the processing unit 502 determines, based on the measurement report from the terminal device, that the terminal device needs to be handed over to the second base station.

The receiving unit 503 is configured to receive a handover response message from the second base station. The handover response message includes information about a pilot signal allocated by the second base station to the terminal device.

The sending unit 501 is further configured to send a measurement control message to the terminal device. The measurement control message includes the information about the pilot signal.

The receiving unit 503 is further configured to receive a measurement response message from the terminal device. The measurement response message includes signal quality of the pilot signal.

The processing unit 502 is further configured to perform a cell handover process for the terminal device after determining that the signal quality of the pilot signal satisfies a handover condition.

Optionally, the sending unit 501 may send a handover cancel message to the second base station after the processing unit 502 determines that the signal quality of the pilot signal does not satisfy the handover condition.

Specifically, when determining the second base station to which the terminal device needs to be handed over, the processing unit 502 may use one of the following three manners:

First manner: The processing unit 502 determines, according to a load balance policy, the second base station to which the terminal device needs to be handed over.

Second manner: The processing unit 502 determines the second base station based on a service request of the terminal device.

Third manner: The processing unit 502 determines the second base station based on a frequency priority of a cell.

In a possible implementation, before the sending unit 501 sends the measurement control message to the terminal device, the processing unit 502 may determine that the communications apparatus is capable of serving the terminal device when a handover fails.

After the terminal device is handed over, the receiving unit 503 may receive a handover request from a third base station. Then the sending unit 501 sends a handover response message to the third base station. The handover response message includes information about a pilot signal allocated by the communications apparatus to the terminal device.

The third base station is another base station different from a first base station, and may be a base station to which the terminal device is connected after the terminal device is handed over from the first base station. In other words, the third base station may be the second base station, or may be another base station.

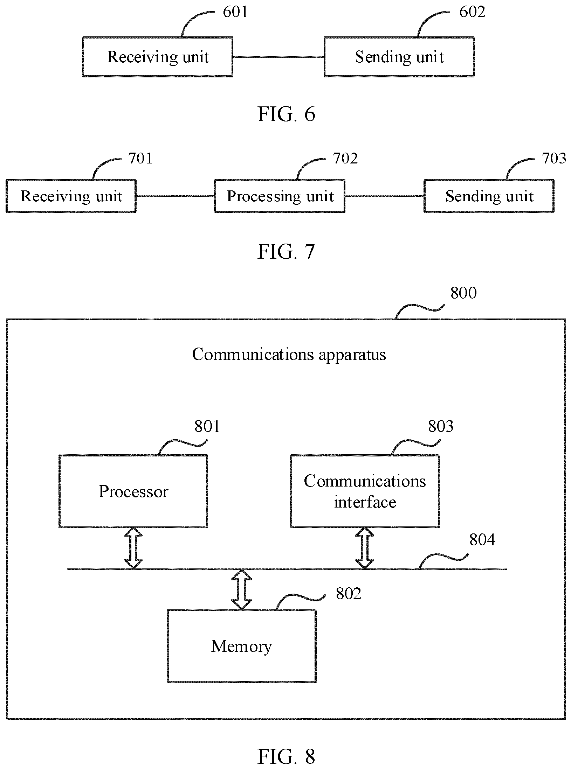

Based on a same inventive concept as the method embodiment, an embodiment of this application further provides a communications apparatus. The communications apparatus is configured to perform the method performed by the target base station of the foregoing method embodiment. For related features, refer to the foregoing method embodiment. Details are not described herein again. As shown in FIG. 6, the apparatus includes a receiving unit 601 and a sending unit 602.

The receiving unit 601 is configured to receive a handover request from a first base station.

The sending unit 602 is configured to send a handover response message to the first base station. The handover response message includes information about a pilot signal allocated by the communications apparatus to a terminal device.

Optionally, the receiving unit 601 may further receive a handover cancel message from the first base station.

Based on a same inventive concept as the method embodiment, an embodiment of this application further provides a communications apparatus. The communications apparatus is configured to perform the method performed by the terminal device in the foregoing method embodiment. For related features, refer to the foregoing method embodiment. Details are not described herein again. As shown in FIG. 7, the apparatus includes a receiving unit 701, a processing unit 702 and a sending unit 703.

The receiving unit 701 is configured to receive a measurement control message from a first base station. The measurement control message is used to indicate the communications apparatus to measure signal quality of a pilot signal allocated by a second base station to the communications apparatus.

The processing unit 702 is configured to measure the signal quality of the pilot signal based on the measurement control message.

The sending unit 703 is configured to send a measurement response message to the first base station. The measurement response message includes the signal quality of the pilot signal

Optionally, before the receiving unit 701 receives the measurement control message from the first base station, the sending unit 703 further needs to send a measurement report to the first base station.

Division of the units in the embodiments of this application is an example, and is only logical function division. There may be other division in an actual implementation. In addition, the functional units in the embodiments of this application may be integrated into one processor, or may exist alone physically, or two or more units may be integrated into one module. The foregoing integrated units may be implemented in a form of hardware, or may be implemented in a form of a software functional module.

When the integrated units are implemented in the form of a software functional unit and sold or used as an independent product, the integrated units may be stored in a computer-readable storage medium Based on such an understanding, the technical solutions of this application essentially, or the part contributing to the prior art, or all or some of the technical solutions may be implemented in a form of a software product. The software product is stored in a storage medium and includes several instructions for instructing a terminal device (which may be a personal computer, a mobile phone, a network device, or the like) or a processor (processor) to perform all or some of the steps of the methods in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this embodiment of this application, the first base station, the second base station, and the terminal device may all be presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions.

In a simple embodiment, a person skilled in the art may figure out that a processor, a memory, and a communications interface may all be in a form shown in FIG. 8.

A communications apparatus 800 shown in FIG. 8 includes at least one processor 801 and a memory 802. Optionally, the communications apparatus 800 may further include a communications interface 803.

The memory 802 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 802 is any other medium that can be configured to carry or store expected program code in a form of an instruction or data structure and that canbe accessed by a computer. However, the memory 802 is not limited thereto. The memory 802 may be a combination of the foregoing memories.

A specific connection medium between the processor 801 and the memory 802 is not limited in this embodiment of this application. In this embodiment of this application, the memory 802 is connected to the processor 801 through a bus 804 in the figure. The bus 804 is represented by a thick line in the figure. A manner of connection between other components is schematically described, and is not limited thereto. The bus 804 may be classified into an address bus, a data bus, a control bus, and the like. For ease of representation, only one thick line is used for representation in FIG. 8, but this does not mean that there is only one bus or only one type of bus.

The processor 801 may have a data transceiver function, and can communicate with another device. In the apparatus shown in FIG. 8, an independent data transceiver module such as the communications interface 803 may also be disposed, and is configured to receive and send data. When communicating with another device, the processor 801 may transmit data through the communications interface 803.

When the first base station is in the form shown in FIG. 8, the processor 801 in FIG. 8 may invoke a computer-executable instruction stored in the memory 802, to enable the first base station to perform the method performed by the source base station of any one of the foregoing method embodiments.

Specifically, the functions/implementation processes of the sending unit, the receiving unit, and the processing unit in FIG. 5 may all be implemented by the processor 801 in FIG. 8 by invoking the computer-executable instruction stored in the memory 802. Alternatively, the functions/implementation processes of the processing unit in FIG. 5 may be implemented by the processor 801 in FIG. 8 by invoking the computer-executable instruction stored in the memory 802, and the functions/implementation processes of the sending unit and the receiving unit in FIG. 5 may be implemented through the communications interface 803 in FIG. 8.

When the second base station is in the form shown in FIG. 8, the processor 801 in FIG. 8 may invoke a computer-executable instruction stored in the memory 802, to enable the second base station to perform the method performed by the target base station of any one of the foregoing method embodiments.

Specifically, the functions/implementation processes of the receiving unit and the sending unit in FIG. 6 may all be implemented by the processor 801 in FIG. 8 by invoking the computer-executable instruction stored in the memory 802. Alternatively, the functions/implementation processes of the receiving unit and the sending unit in FIG. 6 may be implemented through the communications interface 803 in FIG. 8.

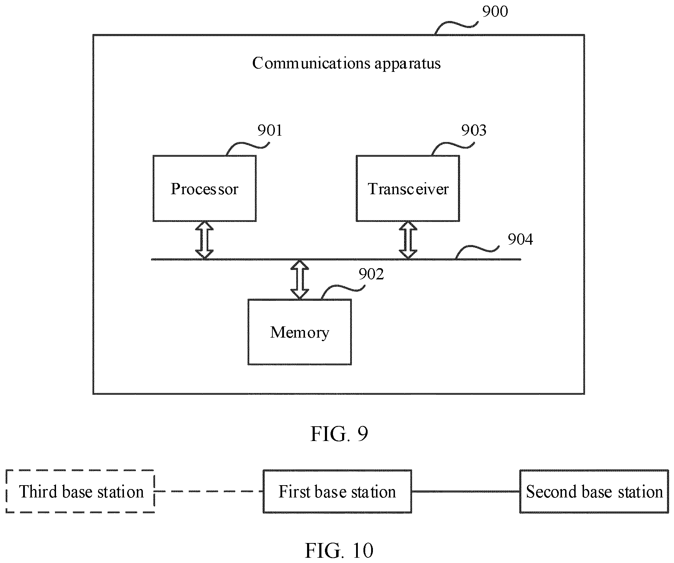

A communications apparatus 900 shown in FIG. 9 includes at least one processor 901 and a memory 902. Optionally, the communications apparatus 900 may further include a transceiver 903.

The memory 902 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 902 is any other medium that can be configured to carry or store expected program code in a form of an instruction or data structure and that canbe accessed by a computer. However, the memory 902 is not limited thereto. The memory 902 may be a combination of the foregoing memories.

A specific connection medium between the processor 901 and the memory 902 is not limited in this embodiment of this application. In this embodiment of this application, the memory 902 is connected to the processor 901 through a bus 904 in the figure. The bus 904 is represented by a thick line in the figure. A manner of connection between other components is schematically described, and is not limited thereto. The bus 904 may be classified into an address bus, a data bus, a control bus, and the like. For ease of representation, only one thick line is used for representation in FIG. 9, but this does not mean that there is only one bus or only one type of bus.

The processor 901 may have a data transceiver function, and can communicate with another device. In the apparatus shown in FIG. 9, an independent data transceiver module such as the transceiver 903 may also be disposed, and is configured to receive and send data. When communicating with another device, the processor 901 may transmit data by using the transceiver 903.

When the terminal device is in the form shown in FIG. 9, the processor 901 in FIG. 9 may invoke a computer-executable instruction stored in the memory 902, to enable the terminal device to perform the method performed by the terminal device in any one of the foregoing method embodiments.

Specifically, the functions/implementation processes of the sending unit, the receiving unit, and the processing unit in FIG. 7 may all be implemented by the processor 901 in FIG. 9 by invoking the computer-executable instruction stored in the memory 902. Alternatively, the functions/implementation processes of the processing unit in FIG. 7 may be implemented by the processor 901 in FIG. 9 by invoking the computer-executable instruction stored in the memory 902, and the functions/implementation processes of the sending unit and the receiving unit in FIG. 7 may be implemented by using the transceiver 903 in FIG. 9.

Based on a same inventive concept as the method embodiment, an embodiment of this application further provides a communications system, configured to perform the method in any one of the foregoing embodiments. For related features, refer to the foregoing method embodiment. Details are not described herein again.

For a schematic structural diagram of a communications system according to an embodiment of this application, refer to FIG. 10. Specifically, the communications system includes a first base station and a second base station.

Specifically, the first base station is configured to send a handover request to the second base station when determining, based on a measurement report from a terminal device, that the terminal device needs to be handed over to the second base station.

The second base station is configured to receive the handover request sent by the first base station, and send a handover response message to the first base station. The handover response message includes information about a pilot signal allocated by the second base station to the terminal device.

The first base station is further configured to receive the handover response message sent by the second base station, and send a measurement control message to the terminal device. The measurement control message includes the information about the pilot signal. The first base station receives a measurement response message from the terminal device. The measurement response message includes signal quality of the pilot signal. The first base station performs a cell handover process for the terminal device when the signal quality of the pilot signal satisfies a handover condition.

Optionally, after determining that the signal quality of the pilot signal does not satisfy the handover condition, the first base station may further send a handover cancel message to the second base station.

Specifically, when determining the second base station to which the terminal device needs to be handed over, the first base station may use one of the following three manners:
1. The first base station determines, according to a load balance policy, the second base station to which the terminal device needs to be handed over.
2. The first base station determines the second base station based on a service request of the terminal device.
3. The first base station determines the second base station based on a frequency priority of a cell.

Optionally, before sending the measurement control message to the terminal device, the first base station may further determine that the first base station is capable of serving the terminal device when a handover fails.

The system further includes a third base station. The first base station may receive a handover request from the third base station, and send a handover response message to the third base station. The handover response message includes information about a pilot signal allocated by the first base station to the terminal device.

A person skilled in the art should understand that the embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. The computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements the specific function in the one or more processes in the flowcharts and/or in the one or more blocks in the block diagrams.

The computer program instructions may alternatively be loaded on the computer or the another programmable data processing device, so that a series of operation steps are performed on the computer or the another programmable data processing device to produce processing implemented by the computer. Therefore, the instructions executed on the computer or the another programmable data processing device provide steps for implementing the specific function in the one or more processes in the flowcharts and/or in the one or more blocks in the block diagrams.

It is clear that a person skilled in the art can make various modifications and variations to this application without departing from the scope of this application. This application is intended to cover these modifications and variations provided that they fall within the scope of protection defined by the following claims of this application and their equivalent technologies.

## Claims

1. A cell handover method, wherein the method comprises:
sending, by a first base station, a handover request to a second base station when determining, based on a measurement report from a terminal device, that the terminal device needs to be handed over to the second base station;
receiving, by the first base station, a handover response message from the second base station, wherein the handover response message comprises information about a pilot signal allocated by the second base station to the terminal device;
sending, by the first base station, a measurement control message to the terminal device, wherein the measurement control message comprises the information about the pilot signal;
receiving, by the first base station, a measurement response message from the terminal device, wherein the measurement response message comprises signal quality of the pilot signal; and
performing, by the first base station, a cell handover process for the terminal device when the signal quality of the pilot signal satisfies a handover condition.

2. The method according to claim 1, wherein the method further comprises:
sending, by the first base station, a handover cancel message to the second base station when the signal quality of the pilot signal does not satisfy the handover condition.

3. The method according to claim 1 or 2, wherein before the sending, by the first base station, a measurement control message to the terminal device, the method further comprises:
determining, by the first base station, that the first base station is capable of serving the terminal device when a handover fails.

4. The method according to claim 1, wherein the method further comprises:
determining, by the first base station, the second base station to which the terminal device needs to be handed over.

5. The method according to claim 4, wherein the determining, by the first base station, the second base station to which the terminal device needs to be handed over comprises:
determining, by the first base station according to a load balance policy, the second base station to which the terminal device needs to be handed over, or
determining, by the first base station, the second base station based on a service request of the terminal device; or
determining, by the first base station, the second base station based on a frequency priority of a cell.

6. The method according to claim 1, wherein after the performing, by the first base station, a cell handover process for the terminal device, the method further comprises:
receiving, by the first base station, a handover request from a third base station; and
sending, by the first base station, a handover response message to the third base station, wherein the handover response message comprises information about a pilot signal allocated by the first base station to the terminal device.

7. A cell handover method, wherein the method comprises:
receiving, by a second base station, a handover request from a first base station; and
sending, by the second base station, a handover response message to the first base station, wherein the handover response message comprises information about a pilot signal allocated by the second base station to a terminal device.

8. The method according to claim 7, wherein the method further comprises:
receiving, by the second base station, a handover cancel message from the first base station, and stopping reserving a resource for the terminal device.

9. A cell handover method, wherein the method comprises:
receiving, by a terminal device, a measurement control message from a first base station, wherein the measurement control message comprises information about a pilot signal allocated by a second base station to the terminal device;
measuring, by the terminal device, signal quality of the pilot signal based on the measurement control message; and
sending, by the terminal device, a measurement response message to the first base station, wherein the measurement response message comprises the signal quality of the pilot signal.

10. The method according to claim 9, wherein before the receiving, by a terminal device, a measurement control message from a first base station, the method further comprises:
sending, by the terminal device, a measurement report to the first base station.

11. A communications apparatus, wherein the communications apparatus comprises a sending unit, a processing unit, and a receiving unit, wherein
the sending unit is configured to send a handover request to a second base station when the processing unit determines, based on a measurement report from a terminal device, that the terminal device needs to be handed over to the second base station;
the receiving unit is configured to receive a handover response message from the second base station, wherein the handover response message comprises information about a pilot signal allocated by the second base station to the terminal device;
the sending unit is further configured to send a measurement control message to the terminal device, wherein the measurement control message comprises the information about the pilot signal;
the receiving unit is further configured to receive a measurement response message from the terminal device, wherein the measurement response message comprises signal quality of the pilot signal; and
the processing unit is further configured to perform a cell handover process for the terminal device when determining that the signal quality of the pilot signal satisfies a handover condition.

12. The communications apparatus according to claim 11, wherein the sending unit is further configured to send a handover cancel message to the second base station when the signal quality of the pilot signal does not satisfy the handover condition.

13. The communications apparatus according to claim 11, wherein before the sending unit sends the measurement control message to the terminal device, the processing unit is further configured to:
determine that the communications apparatus is capable of serving the terminal device when a handover fails.

14. The communications apparatus according to claim 11, wherein the processing unit is further configured to determine the second base station to which the terminal device needs to be handed over.

15. The communications apparatus according to claim 11, wherein when determining the second base station to which the terminal device needs to be handed over, the processing unit is specifically configured to:
determine, according to a load balance policy, the second base station to which the terminal device needs to be handed over; or
determine the second base station based on a service request of the terminal device; or
determine the second base station based on a frequency priority of a cell.

16. The communications apparatus according to claim 11, wherein
the receiving unit is further configured to receive a handover request from a third base station; and
the sending unit is further configured to send a handover response message to the third base station, wherein the handover response message comprises information about a pilot signal allocated by the communications apparatus to the terminal device.

17. A communications apparatus, wherein the communications apparatus comprises a receiving unit and a sending unit, wherein
the receiving unit is configured to receive a handover request from a first base station; and
the sending unit is configured to send a handover response message to the first base station, wherein the handover response message comprises information about a pilot signal allocated by the communications apparatus to a terminal device.

18. The communications apparatus according to claim 17, wherein the communications apparatus further comprises a processing unit, wherein
the receiving unit is further configured to receive a handover cancel message from the first base station; and the processing unit is configured to stop reserving a resource for the terminal device after the receiving unit receives the handover cancel message.

19. A communications apparatus, wherein the communications apparatus comprises a receiving unit, a processing unit, and a sending unit, wherein
the receiving unit is configured to receive a measurement control message from a first base station, wherein the measurement control message comprises information about a pilot signal allocated by a second base station to the communications apparatus;
the processing unit is configured to measure signal quality of the pilot signal based on the measurement control message; and
the sending unit is configured to send a measurement response message to the first base station, wherein the measurement response message comprises the signal quality of the pilot signal

20. The communications apparatus according to claim 19, wherein before the receiving unit receives the measurement control message from the first base station, the sending unit is further configured to:
send a measurement report to the first base station.

21. A communications apparatus, wherein the communications apparatus comprises a processor and a memory, wherein
the memory is configured to store a computer-executable instruction, and when the communications apparatus runs, the processor executes the computer-executable instruction stored in the memory, to enable the communications apparatus to perform the method according to any one of claims 1 to 6.

22. A communications apparatus, wherein the communications apparatus comprises a processor and a memory, wherein
the memory is configured to store a computer-executable instruction, and when the communications apparatus runs, the processor executes the computer-executable instruction stored in the memory, to enable the communications apparatus to perform the method according to either of claims 7 and 8.

23. A communications apparatus, wherein the communications apparatus comprises a processor and a memory, wherein
the memory is configured to store a computer-executable instruction, and when the communications apparatus runs, the processor executes the computer-executable instruction stored in the memory, to enable the communications apparatus to perform the method according to either of claims 9 and 10.

24. A computer-readable storage medium, wherein the computer-readable storage medium stores an instruction, and when the instruction is run on a computer, the computer is enabled to perform the method according to any one of claims 1 to 6.

25. A computer-readable storage medium, wherein the computer-readable storage medium stores an instruction, and when the instruction is run on a computer, the computer is enabled to perform the method according to either of claims 7 and 8.

26. A computer-readable storage medium, wherein the computer-readable storage medium stores an instruction, and when the instruction is run on a computer, the computer is enabled to perform the method according to either of claims 9 and 10.

27. A computer chip, wherein the chip is connected to a memory, and the chip is configured to read and execute a software program stored in the memory, to perform the method according to any one of claims 1 to 10.

28. A computer program product comprising an instruction, wherein when the computer program product runs on a computer, the computer is enabled to perform the method according to any one of claims 1 to 10.

29. A communications system, wherein the communications system comprises a first base station and a second base station, wherein
the first base station is configured to send a handover request to the second base station when determining, based on a measurement report from a terminal device, that the terminal device needs to be handed over to the second base station;
the second base station is configured to receive the handover request sent by the first base station, and send a handover response message to the first base station, wherein the handover response message comprises information about a pilot signal allocated by the second base station to the terminal device; and
the first base station is further configured to receive the handover response message sent by the second base station, and send a measurement control message to the terminal device, wherein the measurement control message comprises the information about the pilot signal; receive a measurement response message from the terminal device, wherein the measurement response message comprises signal quality of the pilot signal; and perform a cell handover process for the terminal device when the signal quality of the pilot signal satisfies a handover condition.

30. The communications system according to claim 29, wherein the first base station is further configured to:
send a handover cancel message to the second base station when the signal quality of the pilot signal does not satisfy the handover condition.

31. The communications system accordingto claim29, whereinbefore sending the measurement control message to the terminal device, the first base station is further configured to:
determine that the first base station is capable of serving the terminal device when a handover fails

32. The communications system according to claim 29, wherein the first base station is further configured to determine, based on the measurement report from the terminal device, the second base station to which the terminal device needs to be handed over.

33. The communications system according to claim 30, wherein when determining the second base station to which the terminal device needs to be handed over, the first base station is specifically configured to:
determine, according to a load balance policy, the second base station to which the terminal device needs to be handed over; or
determine the second base station based on a service request of the terminal device; or
determine the second base station based on a frequency priority of a cell.

34. The communications system according to any one of claims 29 to 33, wherein the system further comprises a third base station, wherein
the first base station is further configured to receive a handover request from the third base station; and send a handover response message to the third base station, wherein the handover response message comprises information about a pilot signal allocated by the first base station to the terminal device.
